(19) Europäisches Patentamt
European Patent Office
Office européen des brevets

(11) EP 4 549 489 A1

(12) EUROPEAN PATENT APPLICATION

(43) Date of publication:
**07.05.2025 Bulletin 2025/19**

(21) Application number: **24210128.5**

(22) Date of filing: **31.10.2024**

(51) International Patent Classification (IPC):
***C08G 77/16*** *(2006.01)*

(52) Cooperative Patent Classification (CPC):
**C08G 77/16**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **02.11.2023 EA 202300065**

(71) Applicant: **Bioline Pharmaceutical AG**
**6340 Baar (CH)**

(72) Inventors:
- **MARTYNENKO, Aleksandr Mykhailovich**
**6340 Baar (CH)**
- **KADNICHANSKIY, Emil Gennadievich**
**6340 Baar (CH)**
- **BADAEV, Sergey Valentinovich**
**6340 Baar (CH)**

(74) Representative: **Meroni, Francesca**
**Jacobacci & Partners S.p.A.**
**Via Senato, 8**
**20121 Milano (IT)**

# (54) POLYMETHYLSILOXANE POLYHYDRATE HAVING SUPRAMOLECULAR PROPERTIES OF A MOLECULAR CAPSULE, METHOD FOR ITS PRODUCTION, AND SORBENT CONTAINING THEREOF

(57) The invention relates to a method for producing a sorbent having selective properties, and in particular to a method for producing polymethylsiloxane polyhydrate (methylsilicic acid hydrogel) used in chemistry, medicine, and veterinary medicine. According to the method, polycondensation of a metasil solution is carried out with acid, the said solution being obtained by mixing at temperatures above 90°C in a ratio of 0.84-1.00 mol, and in the best embodiment of the invention - in the range of 0.84-0.90 mol of alkali per 1 mol of polymethylsiloxane contained in methylsilanetriol, adding an electrolyte in an amount of 0.025-0.1 mol per 1 mol of alkali. The resulting polymethylsiloxane polyhydrate has the supramolecular properties of a molecular capsule.

EP 4 549 489 A1

## Description

The invention relates to a method for producing a sorbent having supramolecular properties of a molecular capsule, and in particular to a method for producing polymethylsiloxane polyhydrate (methylsilicic acid hydrogel) used in chemistry, medicine and veterinary medicine.

BACKGROUND OF THE INVENTION

Polymethylsiloxane polyhydrate (hereinafter referred to as PMSPH) is produced from a solution of methylsilanetriol (Methylsilanetriol, CAS 2445-53-6, https://pubchem.ncbi.nlm.nih.gov/compound/61844) in alkali (potassium hydroxide or sodium hydroxide).

In turn, methylsilanetriol is a product of the hydrolysis of methyltrichlorosilane (Methyltrichlorosilane, CAS 75-79-6, https://pubchem.ncbi.nlm.nih.gov/compound/6399) and is a granular substance of a polymeric nature with a water content of 40-60% and has a molecular formula:

$$[(CH_3Si)_nO_{(n-1+k)}(OH)_{(n+2-2k)}] \cdot p\ H_2O$$

where n is a number of links

k is a branching index determining the degree of cross-linking or branching

$$0 \leq k \leq \frac{n+2-(n \bmod 2)}{2}$$

where mod is a mathematical function that returns the remainder from dividing one number by another
p is external, i.e. chemically unbound, water

$$n : (n/2 - k + 1 + p) = 1 : (2{,}5 \div 5{,}6)$$

As can be seen from the gross formula of methylsilanetriol, it belongs to the class of polymethylsiloxanes, and hereinafter in the text, the more precise term "polymethylsiloxane" (PMS) or "polymethylsiloxane, which is contained in methylsilanetriol" will be used instead of the term "methylsilanetriol (dehydrated)".

Properties and methods for producing polymethylsiloxanes are described in various publications such as the detailed information on the synthesis and properties of organosilicon compounds, including polymethylsiloxanes, contained in R.G. Jones, W. Ando, J. Chojnowski "Silicon-Containing Polymers: The Science and Technology of Their Synthesis and Applications", Springer Science & Business Media, 2013, 768 pages. A broad overview of the principles and mechanisms of formation of materials using the sol-gel method, synthesis methods, characteristics and properties is given in the book by S. Sakka "Handbook of Sol-Gel Science and Technology", Kluwer Academic Publishers, 2005, 1986 pages.

Information on the nature of the siloxane linkage and its effect on the physical properties of compounds, as well as review of polycondensation processes of silanols and siloxanols is presented in the publication by M.G. Voronkov, V.P. Mileshkevich and Yu.A. Yuzhelevsky "Siloxane Linkage", Novosibirsk, Nauka, 1976, 413 pages.

In addition, a number of patents describe the discovery of some special properties of polymethylsiloxanes in the polyhydrate form. Patent RU 2761627 C1, 01.12.2020 describes a method for producing PMSPH from sodium methyl siliconate and hydrochloric acid. Characteristics of the reagents used: for sodium methyl siliconate solution, density is 1.2-1.3 g/cm$^3$; for hydrochloric acid solution, concentration is 12.0-14.0%. The authors pulverized the formed gel and then washed it to neutral acidity. The resulting product exhibits especially high adsorption qualities.

Patent RU 2111979 C1, 11.03.1994 discloses a method for producing methylsilicic acid hydrogel from sodium or potassium methyl siliconate and a strong acid (hydrochloric or sulfuric acid according to the invention claims). The authors give the characteristics of the quantitative content (1.75-2.30 mol/L) for solutions of sodium and potassium methyl siliconate.

Production of highly dispersed and hydrophobic powder of methylsilicic acid hydrogel by mixing sodium methyl siliconate with acetic acid is described in Invention Certificate SU 137113, 19.08.1960. The authors refer to the product as "silica", but the chemical formula of the final compound is similar to PMSPH. The concentration of the solution of sodium methyl siliconate is 12.5%.

The mentioned technical solutions also allow the content of various useful chemical and/or biological additives, however, the reviewed technical solutions are aimed primarily at producing a product with high adsorption properties, and the additives do not have a significant effect on improving the sorption properties of the resulting product.

New possibilities for using the properties of methylsilicic acid hydrogel are disclosed in Patent UA 115857 C2, 30.08.2017, which describes a method of producing a methylsilicic acid hydrogel that has supramolecular properties. Polycondensation of methyl siliconate solutions was carried out using gaseous acid agents. The resulting supramolecular properties were achieved for the first time, but the method of production is difficult to implement, requires special equipment, and the work is carried out at high pressures.

The closest prototype for the technical solution under consideration to practically produce PMSPH was mentioned in Patent RU 2293744 C1, 22.12.2005. This patent provides a rationale for the chemical formula of the final product of polymethylsiloxane polyhydrate, but it does not address issues related to composition of the alkaline stock solution of sodium dihydroxymethylsilicate, indicates the presence of only one substance in the composition of this solution, and provides a narrow range of water content only for the gel form of the substance. In addition, the patent does not consider the possibility of imparting supramolecular properties to the product.

It should be noted that all of the above technical solutions do not pay due attention to the problem of the quality of the composition of sodium methyl siliconate or the original solution of metasil, which leads to the formation of low molecular weight fractions during the polycondensation process, which affects the properties of the resulting product by reducing its purity, i.e. lower quality, impedes substitution reactions and reduces the yield of the resulting product.

SUMMARY OF THE INVENTION

The proposed invention solves the technical problems of producing a polymethylsiloxane polyhydrate with the supramolecular properties of a molecular capsule qualities, as well as increasing the yield and improving the purity of the resulting product.

To solve the above problems, the proposed method for producing polymethylsiloxane polyhydrate with the supramolecular properties of a molecular capsule, acid is applied to a metasil solution that caused polycondensation and the solution is mixed at temperatures above 90°C in a ratio of 0.84-0.9 mol of alkali per 1 mol of polymethylsiloxane contained in methylsilanetriol, and an electrolyte in an amount of 0.025-0.1 mol is added for each mole of alkali. The alcali is sodium or potassium hydroxide.

The electrolyte can be lithium, sodium, potassium, ammonium chloride, bromide, iodide, nitrate, nitrite, carbonate, sulfate, sulfite, acetate, oxalate, succinate, formate, citrate, or a mixture of these salts.

The electrolyte contributes to increasing supramolecular properties of the substance, as well as change in the q range.

Adding electrolytes to the methylsilanetriolalkaline solution results in the formation of unique polymethylsiloxane polyhydrate (PMSPH) having the supramolecular properties of a molecular capsule, which represents new directions in the field of material properties.

Polymethylsiloxane polyhydrate having supramolecular properties has the following a structural chemical formula:

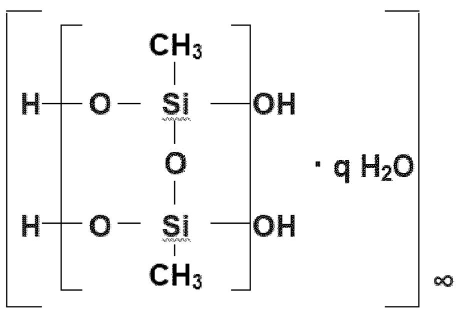

The resulting PMSPH has a hight sorption capacity, which makes it a useful sorbent. The structure of PMSPH can be described as a dimer of variable composition having a polyhydrate shell.

Change in the chemical formula of polymethylsiloxane polyhydrate and its properties occurred due to a change in the n range.

BRIEF DESCRIPTION OF THE GRAPHIC MATERIALS

FIG. 1 - Regions of formation of m-mers (1 ≤ m ≤ 3) when dissolving methylsilanetriol in alkali, where:

bottom set of lines for ($8 \leq n \leq \infty$) represents 3-mers
middle set of lines represents dimers
top set of lines represents monomers.

DETAILED DESCRIPTION OF THE INVENTION

The authors of the present invention have detailed the chemical formula of polymethylsiloxane polyhydrate by confirming the composition of the metasil solution containing a set of dimeric siloxanolate derivatives, expanded the range of water content for the gel form of the substance, and determined the ranges of water content for paste-like and suspension forms of the substance. By adding electrolyte solutions to the metasil solution, the authors of the present invention produced a resulting compound having the unique supramolecular properties of a molecular capsule.

To evaluate the completeness of polymer branching, along with the cross-linking or branching degree index (k), a normalized binding index (I(b) - index binding) is used, with values ranging from 0 (0%) to 1 (100%), corresponding to a linear polymer structure at I(b) = 0 and a fully condensed structure at I(b) = 1.

The relationship between the I(b), k and k(max) indices is defined by the ratios:

$$I_b = \frac{k}{k(\max)}; \quad k(\max) = \frac{n + 2 - (n \bmod 2)}{2}$$

In the process of producing a solution of polymethylsiloxane in alkali (conventional symbol of the alkali is MeOH), the interactions are described by the following stages:

stage 1 - debranching of a molecule by breaking intramolecular siloxane bonds under the influence of alkali;
stage 2 - breaking of siloxane bonds of large molecules to form smaller molecules;
stage 3 - substitution of hydroxyl groups with an alkali metal cation to form OMe groups.

We now examine each stage in detail.

It should be noted that in the reaction equations below, water is not indicated in the chemical formulas of the compounds, since in these reactions it does not interact chemically.

Stage 1

The chemical reaction equation in this stage is:

$$(CH_3Si)_nO_{(n+k-1)}(OH)_{(n-2k+2)} + k\ MeOH \Rightarrow (CH_3Si)_nO_{(n-1)}(OH)_{(n-k+2)}(OMe)_{(k)} \qquad (1)$$

The alkali consumption at this stage is proportional to the degree of branching of the original polymethylsiloxane molecule.

Stage 2

The chemical reaction equation with the formation of an intermediate and the subsequent separation of a fragment with m dimension from the main molecule of n dimension has the form:

$$\underset{\text{original molecule with n unit dimension}}{(CH_3Si)_nO_{(n-1)}(OH)_{(n-k+2)}(OMe)_k} + \underset{\text{alkali metal hydroxide}}{MeOH} \Rightarrow \underset{\text{intermediate}}{[(CH_3Si)_nO_{(n-2)}(OH)_{(n-k+3)}(OMe)_{(k+1)}]} \Rightarrow$$

$$\Rightarrow \underset{\text{molecule with m (m<n) unit dimension}}{[(CH_3Si)_mO_{(m-1)}(OH)_{(m-x+2)}(OMe)_{(x)}]} + \underset{\text{molecule with (n-m) unit dimension after separation of a fragment of m dimension}}{(CH_3Si)_{(n-m)}O_{(n-m-1)}(OH)_{(n-k-m+x+1)}(OMe)_{(k-x+1)}} \qquad (2.1)$$

The formation of smaller molecules with m dimension (m-mers) from a molecule of n dimension proceeds according to the reaction:

$$A[(CH_3Si)_nO_{(n-1)}(OH)_{(n+2-k)}(OMe)_{(k)}] + B\,MeOH = \begin{matrix} \Rightarrow D\,[(CH_3Si)_mO_{(m-1)}(OH)_{(x)}(OMe)_{(m-x+2)}] \\ \Rightarrow E\,[(CH_3Si)_mO_{(m-1)}(OH)_{(y)}(OMe)_{(m-y+2)}] \end{matrix} \quad (2.2)$$

where

$$A = m * (x - y)$$

$$B = (n - m) * (x - y)$$

$$D = m * (n - k + 1) + n * (1 - y)$$

$$E = m * (k - n - 1) + n * (x - 1)$$

Stage 3

In the presence of equal or excess amounts of alkali, a substitution reaction for linear fragments of small dimension is possible.

The chemical reaction equation is:

$$[(CH_3Si)_mO_{(m-1)}(OH)_{(x)}(OMe)_{(m-x+2)}] + x\,MeOH \Rightarrow [(CH_3Si)_mO_{(m-1)}(OMe)_{(m+2)}] + x\,H_2O \quad (3)$$

All three stages are feasible and can occur during the interaction of polymethylsiloxane contained in methylsilanetriol with alkali.

The objectives of the proposed invention are: theoretical assessment of the process of producing the products of interaction of methylsilanetriol with alkali, practical confirmation of this theoretical assessment and improvement of methods for optimization and control of the process of producing a solution of methylsilanetriol in alkali, as well as the subsequent stage of producing polymethylsiloxane polyhydrate (PMSPH).

By combining stages 1 and 2 (chemical reaction equations (1) and (2.1)), it was possible to study models for the production of fragments having smaller dimensions, as well as to carry out their quantitative and qualitative assessment. To this end, the reaction equations were derived and the stoichiometric coefficients of the equation were calculated. To make calculations possible, the method of composing half-reaction equations with the formation of two fragments of the same dimension (m-mers) was chosen. The general reaction equation was derived by combining the half-reaction equations, taking into account the conditions the formation of reaction products. The initial premise is that in the process of interaction of polymethylsiloxane with alkali, fragments of dimension m are formed, and consideration was given to the possibility of formation of reaction products with dimensions of monomers (m = 1) to 3-mers (m = 3).

The chemical equation for the reaction of stages 1 and 2 is:

$$A\,[(CH_3Si)_nO_{(n+k-1)}(OH)_{(n-2k+2)}] + B\,MeOH = \begin{matrix} \Rightarrow D\,[(CH_3Si)_mO_{(m-1)}(OH)_{(x)}(OMe)_{(m-x+2)}] \\ \Rightarrow E\,[(CH_3Si)_mO_{(m-1)}(OH)_{(y)}(OMe)_{(m-y+2)}] \end{matrix} \quad (4)$$

where

$$A = m\,(x - y)$$

$$B = m\,(x - y) * (\frac{n}{m} + k - 1)$$

$$D = m(n - k + 1) + n(1 - y)$$

$$E = m(k - n - 1) + n(x - 1)$$

common range for k: $0 \leq k \leq \frac{n+2-(n \bmod 2)}{2}$ for the possibility to form products (D ≥ 0; E ≥ 0) range of k values:

$$(n(1 - \frac{x-1}{m}) + 1) \leq k \leq (n(1 - \frac{y-1}{m}) + 1)$$

where

$$1 \leq m \leq 3$$

$$1 \leq x \leq (m + 2)$$

$$0 \leq y \leq (x - 1)$$

It has been established that to obtain smaller fragments with m dimension, the alkali consumption depends on the size of these fragments (m value) and has the ratio ( $\frac{k-1}{n} + \frac{1}{m}$ ) mol of alkali for each 1 mol of polymethylsiloxane.

To determine the ratio of alkali and PMS in the production process to produce the previously patented product of polymethylsiloxane polyhydrate (Patent RU 2293744 C1, 22.12.2005), the production material balances of the stages of metasil production were studied. It was found that the practical ratio of alkali and PMS at the stages of producing the methylsilicon solution is values of 0.85±0.05 mol of alkali for every 1 mol of PMS. Since the ratio of components used by the authors is less than 1, the statement that a solution of polymethylsiloxane in alkali is a known product of sodium methylsiliconate (Sodium methylsiliconate, CAS 4493-34-9 https://pubchem.ncbi.nlm.nih.gov/compound/23704354) or a known product of potassium methylsiliconate (Potassium methylsilanetriolate, CAS 18089-65-1 https://pubchem.ncbi.nlm.nih.gov/compound/23689131 or CAS 65351-55-5 https://pubchem.ncbi.nlm.nih.gov/compound/6455118) is incorrect.

Thus, the substance produced by the authors in the process of dissolution of polymethylsiliconate contained in methylsilanetriol in alkali is novel. The authors propose to refer this substance to as "metasil solution".

Modeling the compositions of reaction products using reaction schemes (4), as well as further producing and studying samples of substances that are described by these models, led to results unknown in the prior techniques.

There are no direct methods for determining the structure of methylsilanetriol, since the substance contains hydroxyl groups, which, under the slightest influence (changes in acidity, temperature or other chemical and/or physical factors), contribute to the rearrangement of noncondensed hydroxyl groups, and therefore to a change in structure and composition. In addition, the substance contains physically bound water, which represents a separate phase.

Since methylsilanetriol is a product of the hydrolysis of methyltrichlorosilane, the substance is a spatially cross-linked polymer of variable composition and contains a set of molecules of different lengths (different n values) with different k branching index values (M.G.Voronkov, Yu.N. Murinov et al. Influence of conditions of hydrolytic polycondensation of methyltrichlorosilane on the sorption properties of the resulting silicon polymers, High-molecular compounds, Series A, 2000, v. 42, No. 7, pp. 1175-1182). Based on the data provided by the authors of the article, the binding index in the structures of the products obtained using various process schemes was calculated. The values of the I(b) binding index of the resulting substances are in the range of 0.4-1 with an average value of 0.76. The average values of I(b) binding index are in the range of 0.62-0.88.

It should also be taken into account that methylsilanetriol does not consist of linear molecules, because hydrogen chloride, which is formed as a by-product during the hydrolysis of methyltrichlorosilane, does not allow the formation of a completely linear form of molecules with the chemical formula of $[(CH_3Si)_nO_{(n-1)}OH_{(n+2)}]\cdot pH_2O$ (V.M. Kopylov, L.M. Khananashvili, O.V. Shkolnik, A.G. Ivanov Hydrolytic polycondensation of organochlorosilanes (review), High-molecular compounds, Series A, 1995, v. 37, No. 3, pp. 394-416). In this regard, the values of the k branching index or the I(b) binding

index are always greater than zero. For structures with branching index k = k(max) or I(b) = 1, the characteristic is hydrophobicity, since such a structure does not contain hydrophilic groups. When methylsilanetriol is added to water and the solution is subsequently vacuumized to remove air, methylsilanetriol completely precipitates to the bottom of the vessel.. This fact indicates the absence of structures with branching index k = k(max) or I(b) = 1 in the composition of methylsilanetriol. Thus, methylsilanetriol is a spatially cross-linked molecule of the general formula:

$$[(CH_3Si)_nO_{(n-1+k)}(OH)_{(n+2-2k)}]\cdot pH_2O$$

where

n is a number of links
k is a branching index, where $2 \leq k \leq (0{,}5n - 0{,}5(n \bmod 2))$
p is external, i.e. chemically unbound, water
n : (n/2-k+1+p) = 1 : (2,5÷5,6).

To determine the composition of m-mers of the PMS solution in alkali, the authors calculated the reaction products according to the reaction equation (4). The boundaries of the m-mer formation regions were calculated based on the dependence of the ratio of components alkali : PMS on the I(b) binding index in the original polymethylsiloxane. When carrying out calculations, the following was taken into account:

- polymethylsiloxane of the methylsilanetriol does not contain fully linear (k = 0) or cyclic (k = 1), or fully bonded (k < k(max) - 1) structures in the composition (condition of the form $2 \leq k \leq (0.5n - 0.5\ (n \bmod 2))$);
- the minimum number of (n) units in polymethylsiloxane of the methylsilanetriol, taking into account the conditions stated above, is 8;
- the maximum number of (n) units in the methylsilanetriol tends to infinity ($n \to \infty$);
- to eliminate dimensionlessness in the component ratio function, the I(b) normalized binding index was used as an argument of the function.

The function of the dependence of the component ratio (mol/mol) on the binding index has the form:

$$[\mathrm{MeOH/PMS}] = \frac{\mathrm{k(max)}}{\mathrm{n}} \cdot \mathrm{I(b)} + \frac{1}{\mathrm{m}} - \frac{1}{\mathrm{n}}$$

where

[MeOH/PMS] is a molar ratio of components when dissolving PMS in alkali

n is a number of units in polymethylsiloxane contained in methylsilanetriol

k(max) is maximum possible branching within a PMS molecule with the number of n units ( $(k(max) = \frac{n+2-(n \bmod 2)}{2})$ )

I(b) is binding index ( $I(b) = \frac{k}{k(max)}$ )

m is dimension of the m-mer obtained as a result of the reaction ($1 \leq m \leq 3$).

The regions of formation of m-mers, as well as a comparison with the ratios of components used in practice when producing PMSPH, are presented in FIG. 1.

In FIG. 1, sets of lines represent the regions of formation of m-mers in the process of dissolution of polymethylsiloxane of the methylsilanetriol in alkali (for monomers - a top set of lines, for dimers - a middle set of lines and for 3-mers - a bottom set of lines at $8 < n < \infty$). The resulting sets of lines (for different n values in the PMS) with a slope ratio (0.5 + 1/n) limit the minimum values of the component ratio to obtain a given m-mer. Thus, for the formation of monomers (m = 1, the upper set) from the PMS with binding index of $0.1 \leq I(b) \leq 0.41$, it is necessary that the ratio of the alkali components : PMS be more than 1.20 : 1, and for the formation of monomers from the PMS with binding index of $0.42 \leq I(b) \leq 0.77$, the ratio of the alkali components : PMS should be more than 1.39 : 1. The graphs presented in FIG. 1 give a clear idea that

when the ratio of the alkali components : PMS is at the level of 0.8 : 1 (calculated component ratios for the production of PMSPH according to Patent RU 2293744 C1), the reaction products are dimers obtained from PMS with binding index of 0 ≤ I(b) < (0.60-0.66), as well as 3-mers with binding index of (0.60-0.73) < I(b) < 0.94. When the ratio of alkali components : PMS is at the level of (0.83-0.9) : 1, the reaction products are exclusively dimers obtained from PMS with binding index of 0-0.83. The data obtained are consistent with those given in the source by M.G. Voronkov, Yu.N. Murinov et al. Influence of conditions of hydrolytic polycondensation of methyltrichlorosilane on the sorption properties of the resulting silicon polymers, High-molecular compounds, Series A, 2000, v. 42, No. 7, pp. 1175-1182, and also confirm the previously mentioned conclusion that a solution of polymethylsiloxane in alkali is not a known product of sodium methyl siliconate or potassium methyl siliconate with chemical formulas $CH_3Si(OH)_x(ONa)_{(3-x)}$ or $CH_3Si(OH)_x(OK)_{(3-x)}$, where $0 \leq x \leq 2$.

When using a PMS consisting of structures with branching index values of 0 ≤ k ≤ k(max) for each of the PMS structures in methylsilanetriol, the required amount of alkali ranges from 0.9 (at k = 0) to 1.5 (at k = k(max )) mole for each mole of the PMS to allow the formation of monomers (m = 1). When using alkali in a molar ratio to PMS in the range from 0.45 (at k = 0) to 1.0 (at k = k(max)), the reaction products are dimers (m = 2). To form 3-mers (m = 3), the ratio should be 0.28-0.83. Since the ranges of ratios for the formation of dimers and 3-mers overlap, to obtain a strict set of dimers, a molar ratio of alkali to PMS should be used in the range of 0.84-1.0. Given that in practice the PMS contained in methylsilanetriol does not consist of structures across the entire range of k branching index, and also taking into account the maximum practical molar ratio of the alkali to PMS being of 0.9, to obtain dimers, the recommended range of the molar ratio of the alkali : PMS will be 0.84-0.9. Thus, the authors came to the conclusion that varying the molar ratio of the alkali : PMS, according to the data presented, it is possible to carry out the directed synthesis of m-mers while obtaining predictive reaction products.

In connection with the above, it becomes obvious that in the process of practical production of a solution of methylsilanetriol in alkali, the formation of products described by stage 3 (substitution reactions according to equation (3) with the formation of OMe groups) does not occur.

It was unexpected that the resulting solution of methylsilanetriol in alkali contained all possible dimeric structures. The composition was expected to consist predominantly of molecules containing two OMe groups for dimers. The actual compositions of methylsilanetriol solutions in alkali are given in Table 1.

Table 1

| Composition of a solution of methylsilanetriol in alkali at different [MeOH]/[PMS] molar ratio | | | | | |
|---|---|---|---|---|---|
| Molecule | Molecular weight of a molecule | Content in solution at MeOH/PMS molar ratio (mol/mol), wt.% | | | |
| | | 0,8 | 0,85 | 0,9 | 1,0 |
| $[(CH_3Si)_2O(OH)_4(ONa)_0]$<br>$[(CH_3Si)_2O(OH)_4(OK)_0]$ | 170,27<br>170,27 | 30,00-34,00 | 30,00-33,00 | 30,00-32,00 | 16,67 |
| $[(CH_3Si)_2O(OH)_3(ONa)_1]$<br>$[(CH_3Si)_2O(OH)_3(OK)_1]$ | 192,25<br>208,36 | 30,00-34,00 | 30,00-33,00 | 30,00-32,00 | 16,67 |
| $[(CH_3Si)_2O(OH)_2(ONa)_2]$<br>$[(CH_3Si)_2O(OH)_2(OK)_2]$ | 214,23<br>246,.45 | 10,67-13,33 | 11,33-13,33 | 12,00-13,33 | 33,33 |
| $[(CH_3Si)_2O(OH)_1(ONa)_3]$<br>$[(CH_3Si)_2O(OH)_1(OK)_3]$ | 236,22<br>284,54 | 10,67-13,33 | 11,33-13,33 | 12,00-13,33 | 16,67 |
| $[(CH_3Si)_2O(OH)_0(ONa)_4]$<br>$[(CH_3Si)_2O(OH)_0(OK)_4]$ | 258,20<br>322,63 | 10,67-13,33 | 11,33-13,33 | 12,00-13,33 | 16,67 |

Due to the fact that the mixtures obtained in practice have a heterogeneous composition, an additional problem arises - obtaining a homogeneous mixture for the purpose of further study, standardization and the possibility of comparison with practical mixtures. To solve this problem, theoretical calculations were used. Thus, for a substance with the value k = (n/2 + 1) (I(b) = 1) in the process of implementing stages 1 and 2, it is possible to obtain a homogeneous mixture of dimers at a ratio of methylsilanetriol : alkali as 1 : 1 or a homogeneous mixture of monomers at the ratio of methylsilanetriol : alkali as 1 : 1.5. The composition of the dimer mixture is given in Table 1 (MeOH/PMS ratio = 1.0). Obtaining a substance with the value k = (n/2 + 1) (I(b) = 1) is not a problem, since dehydrated methylsilanetriol has this structure. Dehydration of methylsilanetriol can be carried out by any available method: atmospheric or vacuum thermal or cryogenic drying, desiccation, etc. The authors dehydrated methylsilanetriol using vacuum drying (temperature 70-80 °C, pressure 0.03-0.05 MPa).

During the process of gelation of PMSPH with an acid solution from a solution of methylsilanetriol in alkali, several

parallel processes occur in the system:

- growth of structures due to intermolecular cross-linking with the formation of salts of the type MeA (Me is an alkali metal, cation A is an anion) as a reaction product;
- polycondensation of structures due to intramolecular cross-links, occurring mainly due to OH groups;
- reactions of substitution of OH groups with OMe or A groups due to the occurrence of reversible substitution reactions upon interaction with reaction products of intermolecular cross-links.

The polycondensation process, accompanied by intermolecular cross-linking, occurs at different rates and slows down as the viscosity of the system increases. Compared to other described processes, polycondensation, accompanied by intermolecular cross-linking, has the highest speed. OMe groups participate in this process.

The process of polycondensation of structures inside molecules occurs at a slower rate, is reversible and depends on the acidity in the system, viscosity, temperature and size of the molecule. This process involves mainly OH groups, as a result of which they are low-reactive in comparison with OMe groups of the previous process.

The occurrence of substitution reactions is the slowest process and depends on the concentration of the formed salts, as well as viscosity. Due to the occurrence of the first process (polycondensation, accompanied by intermolecular cross-linking), $Me^{(+)}$ cations are formed as reaction products, which are capable of undergoing substitution reactions with $H^{(+)}$ ions of uncondensed OH groups and form OMe groups.

At the gelation point, the reaction mixture separates into two parts: an insoluble gel and a soluble sol. The insolubility of the gel is explained by the fact that it represents a single space network, the individual chains of which are tightly linked to each other chemically. At the gelation point, the number-average molecular weight is small, the mass-average molecular mass tends to infinity (S.V. Vdovina, E.Yu. Bondyreva Polycondensation: Guidelines for self-study, Nizhnekamsk, Nizhnekamsk Institute of Chemical Technology, branch of the Federal State Budgetary Educational Institution of Higher Professional Education "KNITU", 2014 , 28 p.).

After reaching the gelation point, the amount of sol begins to decrease rapidly due to its transition to a gel. The viscous reaction mass first turns into an elastic material, and then into a solid, infusible and insoluble product. Along with intermolecular processes, a reaction can occur between functional groups of the same network structure.

All of the above arguments give grounds to assert that PMSPH produced from a solution of methylsilanetriol in alkali at a MeOH/PMS molar ratio of 0.84-0.9, is a dimer of variable composition as an elementary unit with a polyhydrate shell and a mass-average molecular mass tending to infinity . Structurally, such polymethylsiloxane polyhydrate is represented by the chemical formula:

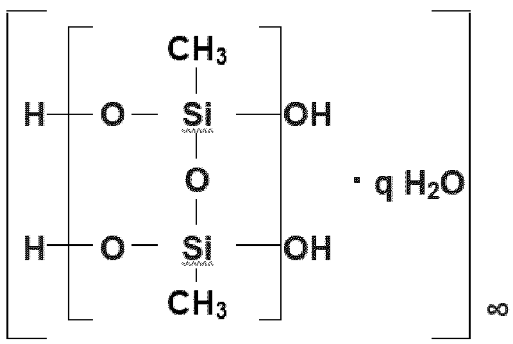

in which

q range of 60-92 is typical for a product in the form of a gel;
q range of 89-134 is typical for a product in the form of a paste;
q range of 133-241 is typical for a product in the form of a suspension.

The authors have modeled the polycondensation process accompanied by intermolecular cross-links. To this end, random half-reactions between the initial m-mers were generated, possibility of the formation of (m+m)-mers was assessed, balances of intermediate and final phases of interaction were compiled, and the next phase of the process was calculated.

The results obtained indicate the formation in each phase of the process of m-mers containing a full set of low-reactive OH groups (e.g. $(CH_3Si)_4O_3(OH)_6$, $(CH_3Si)_8O_7(OH)_{10}$, etc.), as well as a decrease in the number of m-mers with mixed low-reactive OH groups and reactive OMe groups (e.g. $(CH_3Si)_4O_3(OH)_x(OMe)_{6-x}$, where $1 \le x \le 5$, $(CH_3Si)_8O_7(OH)_x(OMe)_{10-x}$, where $1 \le x \le 9$, etc.) or a full set of reaction OMe groups (e.g. $(CH_3Si)_4O_3(OMe)_6$, $(CH_3Si)_8O_7(OMe)_{10}$,

etc.). The data are confirmed by the presence of low-molecular fragments in the IR spectra.

The low-reactive m-mers present are capable of intramolecular condensation upon reaching certain sizes, as mentioned above. The accumulation of low molecular weight (4-mers, 8-mers, etc.) fragments does not lead to the normal course of the gelation process and actually clogs the main product with a fine fraction, leads to a decrease in the practical yield of the target product (PMSPH) and prevents the substitution reaction of OH groups into OMe groups (the above-described substitution process).

The authors were able to eliminate the described problems, increase the yield of the target product and reduce the formation of a low molecular weight fraction during the gelation of PMSPH. The claimed result is achieved by additional adding an electrolyte in the amount of 0.025-0.1 mol for each mole of alkali used to the mixture at the stage of dimer formation during the process of dissolution of methylsilantriol in alkali. The electrolyte is a salt or a mixture of alkali metal or ammonium salts. An unexpected result was that the gel of polymethylsiloxane polyhydrate precipitated by acid solution exhibited supramolecular properties.

Supramolecular properties of substances refer to the properties and behavior of complex structures formed from molecules through intramolecular and intermolecular interactions. Along with strong and directional chemical bonds, weak intermolecular interactions such as hydrogen bonds, hydrophobic interactions, ion-dipole interactions, and van der Waals interactions occur over longer distances and are not limited to certain directions.

Supramolecular properties include the following characteristics:

- self-organization - the ability of molecules to form well-defined structures without external influence;
- recognition and binding - the ability of molecules to interact and bind to other molecules through specific interactions, such as host-guest interactions;
- supramolecular chemistry - the use of weak intermolecular interactions for the controlled synthesis and manipulation of complex structures;
- properties of materials - the ability of supramolecular systems to have unique physical and chemical properties, such as viscosity, optical and electronic properties, the ability to self-heal and change their structure under the influence of external stimuli.

The ability to control the structure of a supramolecular system under external influence (for example, light, force fields, etc. changes in the properties of the environment) opens up the possibility of controlling the structure of the resulting supramolecular substances (crystals or polymers) and their properties.

The property of a substance to confine molecules of another substance inside its own cavity or several cavities due to polycondensation of the end groups of the cavities can be called "guest confinement through intramolecular or intermolecular polycondensation". This property is based on the ability of a substance to form polymer chains through a polycondensation reaction between end groups inside a molecule or between molecules.

This property could be key to creating supramolecular materials that can efficiently bind and confine guest molecules inside their structure. This could be useful in drug storage and delivery, catalysis, sensing, and other applications where controlled encapsulation and release of guest molecules play an important role.

A known class of substances having supramolecular properties are molecular capsules (Donald J. Cram, Jane M. Cram Container Molecules and Their Guests, University of California, Los Angeles, USA, 1994). Molecular containers (capsules) are formed by the self-assembly of molecules of a substance. They may be organic or inorganic in nature and have cavities capable of entrapping guest molecules. One of the main features of molecular capsules is their ability to close or "plug". This occurs, among other things, due to polycondensation or polymerization reactions that can occur with the end groups of the substance that forms the shell of the molecular capsule. Polycondensation allows the binding of the end groups of the molecules of the shell, which leads to its closing and the formation of a stable structure.

The closed cavity of the molecular capsule provides protection and holding of the guest substance molecules inside. This may be useful for:

- controlled drug delivery;
- encapsulation of harmful or toxic or target substances with subsequent evacuation of the "closed" molecular capsule and possible further use of substances after the "opening" of the molecular capsule;
- catalysis of chemical reactions;
- creating unique reaction media for fine chemical syntheses.

Molecular capsules are an active area of research in nanotechnology and supramolecular chemistry. They have potential for use in a variety of applications, including medicine, chemistry, energy and materials science.

The supramolecular properties of PMSPH produced according to the proposed method were evaluated based on the assumption that PMSPH has these properties:

- a guest substance (marker substance) cannot be qualitatively determined in a separate phase (e.g. the solvent of the guest substance) because it is encapsulated (locked) in the PMSPH molecular capsule as a result of the influence on PMSPH molecules by factors that provoke molecular capsule locking;
- a guest substance (marker substance) can be quantitatively determined in any way in a separate phase (e.g. the solvent of the guest substance) because it is not encapsulated in the PMSPH molecular capsule as a result of the influence on PMSPH molecules by factors that provoke molecular capsule unlocking.

Unlocking a molecular capsule only tends to happen after guest substance is locked in the molecular capsule.
If the PMSPG does not exhibit consecutive properties of locking and unlocking the guest substance, it means that this GMSPH does not have supramolecular properties, and also does not form a molecular capsule.

DESCRIPTION OF EMBODIMENTS

**Determination of supramolecular properties of polymethylsiloxane polyhydrate (PMSPH)**

1. A weighed portion of PMSPH with a known specific sorption capacity for marker substances at a pH in the range of 1.0-10.0 was quantitatively transferred to the column and compacted using a plunger. The column is a glass or plastic tube of 40 mm or more in diameter, 200 mm or more in height, with a filter, diameter narrowing to 3-5 mm and a two-way valve at one end.
2. A solution of 0.0001-0.0005 M sodium hydroxide or potassium hydroxide was added into the column until the pH of the solution at the column outlet was in the range of 8.5-10.0. In the modified embodiment of the determination, no alkaline solutions were added.
3. On top of the PMSPH layer, a volume of marker substance solution calculated by determining the specific sorption capacity of PMSPH was poured into the column. Methyl orange or bovine serum albumin (BSA) were used as marker substances; however, the list of marker substances is not limited to the substances mentioned above.
4. After keeping the mixture for the 1.5-2 hours, necessary for polymethylsiloxane to bind the polyhydrate of the marker substance, a calculated volume of 0.0001-0.0005 M acid solution (hydrochloric or sulfuric or citric acid) was added to the column until the pH at the column outlet was in the range of 5.5-7.0. The excess volume of the solution was drained through the bottom pipe of the column and the pH in it was controlled potentiometrically and the content of marker substances was controlled spectrophotometrically. In the modified embodiment of the determination, no acidic solutions were added.
5. Purified water was poured into the column with a total weight 5-10 times greater than the weight of the PMSPH sample.
6. After keeping purified water in the column for 1.5-24 hours, it was drained through the bottom pipe of the column.
7. The solution drained from the column was examined for pH and the content of marker substances using spectrophotometry in the UV and visible regions. Spectrophotometry in the UV range with respect to purified water was carried out in order to qualitatively assess the content of any type of dissolved matter in the test solution. The use of spectrophotometry in the visible region with respect to calibration solutions of marker substances was carried out in the case of confirmation of the presence of soluble matter according to the results of UV spectrophotometry. In the case of using BSA, the solution was additionally treated with a biuret reagent and then spectrophotometry of the resulting complex was carried out. Based on the results of calculating the amounts of marker substances in the test solution, a balance was drawn up and the residual amount of marker substances in the weight of PMSPH was calculated.
8. A calculated volume of 0.0001-0.0005 M acid solution (hydrochloric, sulfuric, or citric acid, not necessarily the same as used in step 4) was poured into the column to achieve a pH in the range of 1.0-2.0. The mixture was kept in the column for 0.5-6 hours, after which purified water was added with a total weight 5-10 times greater than the PMSPG sample weight, but the same weight as in step 5.
9. After keeping purified water in the column for 1.5-24 hours, it was drained through the bottom pipe of the column.
10. The solution drained from the column was studied for pH and the content of marker substances using UV-visible spectrophotometry. Based on the results of calculating the amounts of marker substances in the test solution, a balance was drawn up, the residual amount of marker substances in the weight of PMSPH was calculated, and the supramolecular characteristics of PMSPH were calculated as the ratio of the weight of the marker substance found in the solution in step 9 to the initial weight of the marker substance loaded in step 3.

The obtained supramolecular characteristics were compared with data for PMSPH samples obtained in the usual way and prepared for determination using the method described above.

**Example 1. Method for producing polymethylsiloxane polyhydrate having supramolecular properties of a molecular capsule**

210 g of methylsilanetriol containing 94.5 g of PMS were mixed with 49.8 g of sodium hydroxide (main substance content 98.5%).

The final MeOH/PMS ratio (mol/mol) was 0.87.

After heating the mixture, 1.79 g (0.025 mol per 1 mol of alkali) sodium chloride and 280 g of water were added to it.

The total load weight was 541.59 g.

The mixture was kept at 90 °C for 2 hours.

Characteristics of a solution of methylsilanetriol in alkali: alkalinity 3.1 mol/L; content 310.1 g/L; solution density 1.17 kg/L.

Gel formation was carried out by mixing a solution of methylsilanetriol in alkali with a 3-3.5 M solution of sulfuric acid in a volume ratio of 3-3.3 : 1.

After the gel had matured, it was crushed and washed first with a 0.01-0.015% solution of sulfuric acid until the acidity of the solution reached 2.5-4.0.

Further washing was carried out with water purified to pH values of the wash water of 5.5-7.0 and the absence of electrolyte anions and sulfates.

**Results of determining the supramolecular properties of PMSPH and parameters of some steps of the method for determining supramolecular properties according to Example 1**

1. Weighed portion of PMSPH was 20.53 g.

   Dry residue was 10.03%.
   Sorption capacity for methyl orange was 2.28 mg/g; for bovine serum albumin - 1.2 mg/g.

3. Estimated load per PMSPG sample weight: methyl orange 46.8084 mg, bovine serum albumin 24.636 mg.
4. Weight of washed methyl orange was 0.4208 mg (0.9%).
Weight of washed bovine serum albumin was 0.223 mg (0.91%).
5. Weight of the poured water was 102.65 g.
6. Solution exposure was 9 hours.
7. Weight of washed methyl orange was 1.3294 mg (2.84%).
Weight of washed bovine serum albumin was 0.3856 mg (1.57%).
10. Weight of washed methyl orange was 36.2083 mg (77.35%).

   Weight of washed bovine serum albumin was 19.6049 mg (79.58%).
   Weight of methyl orange remaining in the complex with PMSPH was 8.8499 mg (18.91%).
   Weight of bovine serum albumin remaining in the complex with PMSPH was 4.4225 mg (17.95%).

As can be seen from the data presented in Example 1, the confinement ability of PMSPH is 77% for methyl orange and 79% for bovine serum albumin. That said, the function of the acid in step 4 of the method for testing supramolecular characteristics is to "lock" substances (methyl orange or bovine serum albumin) in the volume of PMSPH. The fact of "locking" is also confirmed by the presence of traces of "locked" substances in the washing solutions even after keeping the complex in a 5-fold amount of water (steps 5-7). A portion of the acid solution added to the complex in step 8 plays the role of a key and "unlocks" substances from the complex, which are freely washed out with water and determined in solution (steps 9-10). The described property of the obtained PMSPH characterizes the product from the standpoint of the presence of supramolecular properties that are absent in PMSPH obtained in the usual way (Examples 2-3).

**Example 2. Production of polymethylsiloxane polyhydrate in the usual way and testing of supramolecular properties (embodiment using sodium hydroxide)**

210 g of methylsilanetriol containing 94.5 g of PMS were mixed with 51.5 g of sodium hydroxide (main substance content 98.5%).

The final MeOH/PMS ratio (mol/mol) was 0.9.

After heating the mixture, 290 g of water was added to it.

The total load weight was 551.5 g.

The mixture was kept at 90 °C for 2 hours.

Characteristics of a solution of methylsilanetriol in alkali: alkalinity 3.2 mol/L; content 286 g/L; solution density 1.19 kg/L.

Gelation, washing and control of washing were carried out according to the same parameters and criteria as in Example 1.

**Results of determining the supramolecular properties of PMSPH and parameters of some steps of the method for determining supramolecular properties according to Example 2**

1. Weighed portion of PMSPH was 21.39 g.

   Dry residue was 8.84%.

   Sorption capacity for methyl orange was 1.12 mg/g; for bovine serum albumin - 0.77 mg/g.

3. Estimated load per PMSPG sample weight: methyl orange 23.957 mg, bovine serum albumin 16.47 mg.
4. Weight of washed methyl orange was 0.5057 mg (2.11%).
Weight of washed bovine serum albumin was 0.2754 mg (1.67%).
5. Weight of the poured water was 171.12 g.
6. Exposure of the solution was 4 hours.
7. Weight of washed methyl orange was 17.3233 mg (72.31%).
Weight of washed bovine serum albumin was 13.456 mg (81.7%).
10. Weight of washed methyl orange was 5.0956 mg (21.27%).

   Weight of washed bovine serum albumin was 2.426 mg (14.73%).
   Weight of methyl orange remaining in the complex with PMSPG was 1.0324 mg (4.31%).
   Weight of bovine serum albumin remaining in complex with PMSPG was 0.3126 mg (1.90%).

**Example 3. Production of polymethylsiloxane polyhydrate in the usual way and testing of supramolecular properties (embodiment using potassium hydroxide)**

200 g of methylsilanetriol containing 90 g of PMS were mixed with 66.9 g of potassium hydroxide (main substance content 99.0%).

The final MeOH/PMS ratio (mol/mol) was 0.88.

After heating the mixture, 270 g of water was added to it.

The total load weight was 536.9 g.

The mixture was kept at 90 °C for 2 hours.

Characteristics of a solution of methylsilanetriol in alkali: alkalinity 3.1 mol/L; content 323 g/L; solution density 1.176 kg/L.

Gelation, washing and control of washing were carried out according to the same parameters and criteria as in Example 1.

**Results of deternination of the supramolecular properties of PMSPH and parameters of some steps of the method for determining supramolecular properties according to Example 3**

1. Weighed portion of PMSPH was 19,94 g.

   Dry residue was 10.13%.
   Sorption capacity for methyl orange was 1.38 mg/g, for bovine serum albumin - 0.91 mg/g.

3. Estimated load per PMSPG sample weight: methyl orange 27.5172 mg, bovine serum albumin 18.1454 mg.
4. Weight of washed methyl orange was 0.8916 mg (3.24%).
Weight of washed bovine serum albumin was 0.3846 mg (2.12%).

5. Weight of the poured water was 159.52 g.
6. Exposure of the solution was 17 hours.
7. Weight of washed methylorange was 21.7881 mg (79.18 %).
Weight of washed bovine serum albumin was 14.3221 mg (78.93 %).
10. Weight of washed methyl orange was 3.9267 mg (14.27%).

Weight of washed bovine serum albumin was 2.8434 mg (15.67%).
Weight of methyl orange remaining in the complex with PMSPG was 0.9108 mg (3.31%).
Weight of bovine serum albumin remaining in the complex with PMSPG was 0.5953 mg (3.28%).

It is obvious from Examples 2 and 3 that the bulk of the substances are washed out during the initial acidification of the solution (step 7). The possible load of marker substances on PMSPH is much lower than in the product of the present invention. Thus it can be concluded that the inventive method for producing polymethylsiloxane polyhydrate makes it possible to produce a product with new properties obtained as a result of carrying out the method of producing the product according to the proposed and described sequence of steps.

**Examples 4-50. Methods for producing structures using a mixture of sodium or potassium chlorides or sulfates or carbonates with a solution of methylsilanetriol in alkali**

Taking into account the low cost of sodium or potassium chlorides, sulfates and carbonates, the authors conducted a series of experiments to study the supramolecular characteristics of polymethylsiloxane polyhydrate with different amounts of added electrolyte in the step of obtaining a solution of methylsilanetriol in alkali.
Gelation, washing and control of washing were carried out according to the same parameters and criteria as in Example 1.
The structures according to Examples 4-50 were obtained according to the method given in Example 1.
The main parameters and supramolecular characteristics using these electrolytes are given in Table 2.
The data on the parameters of supramolecular characteristics in the step of determining the amounts of washed out marker substances do not correlate linearly with the amount of added electrolyte in the step of producing a solution of methylsilanetriol in alkali. According to the authors, this dependence is multiparametric. According to the data presented, it is clear that PMSPH has the ability to "conditionally lock" from 74% to 85% of marker substances, and provided that the acidity of the system is reduced, PMSPH is able to release these substances, which is valuable when using this property of the product in medicine, veterinary medicine and various industries.

**Examples 51-96. Methods for producing structures 51-96 using a mixture of various electrolytes with a solution of methylsilanetriol in alkali**

The structures according to Examples 51-96 were obtained according to the method given in Example 1.
The main parameters and supramolecular characteristics using these electrolytes are given in Table 2.
The sorption capacity values for the samples obtained by the inventive method and described in the Examples are given in Table 2.
Low-molecular electrolytes in solutions formed in the spaces of the hydrogel network lead to the suppression of the dissociation of groups of the polymer network (OH(-), OMe(-) and Me(+)), increase the density of the electrical double layer, due to which the diffusion of the solvent (aqueous-alkaline solution of methylsilanetriol) in the gel mass decreases. This facilitates the occurrence of the polycondensation reaction in the newly created space without excessive entangling of the three-dimensional coil, reduces the isolation of Me(+) ions that are formed as a result of polycondensation, which makes it possible for reactions to replace OH groups with OME groups (E.V. Vorobyeva, N. P. Krutko Polymer complexes in aqueous and saline environments, National Academy of Sciences of Belarus, Institute of General and Inorganic Chemistry, Minsk, Belaruskaya Navuka, 2010, 175 pp.).
The authors emphasize that the proposed invention has developed a new method for producing a solution of methylsilanetriol in alkali, which is unique. The solution contains dimeric molecules and differs from the known potassium or sodium methylsiliconates in its properties and characteristics.

Table 2

| Basic parameters and supramolecular characteristics of PMSPH samples obtained in accordance with the Examples | | | | | | | | | | | |
|---|---|---|---|---|---|---|---|---|---|---|---|
| Example | Parameters of substances | | | | | | | PMSPH supramolecular characteristics | | | |
| | Solution of methylsilanetriol in alkali | | Electrolyte | | PMSPH | | | | | | |
| | Alkali type | MeOH/PMS ratio, mol/mol | Type | Quantity, mole per 1 mole of alkali | Dry residue, % | Sorption capacity, mg/g | | Not washed out from PMSPH, % | | Washed out, % | |
| | | | | | | for MO | for BSA | MO | BSA | MO | BSA |
| **1** | **2** | **3** | **4** | **5** | **6** | **7** | **8** | **9** | **10** | **11** | **12** |
| 1 | NaOH | 0,871 | Sodium chloride solution | 0,025 | 10,03 | 2,28 | 1,2 | 18,9 | 17,95 | 77,35 | 79,57 |
| 2 | NaOH | 0,901 | No electrolyte added | - | 8,84 | 1,12 | 0,77 | 4,31 | 1,90 | 21,27 | 14,73 |
| 3 | KOH | 0,880 | No electrolyte added | - | 10,13 | 1,38 | 0,91 | 3,31 | 3,28 | 14,27 | 15,67 |
| 4 | NaOH | 0,899 | Sodium chloride solution | 0,05 | 8,93 | 1,96 | 1,43 | 16,03 | 15,84 | 80,18 | 80,17 |
| 5 | NaOH | 0,867 | Sodium chloride solution | 0,075 | 9,62 | 2,21 | 1,5 | 17,45 | 14,93 | 79,1 | 81,19 |
| 6 | NaOH | 0,853 | Sodium chloride solution | 0,1 | 10,14 | 2,32 | 1,35 | 16,69 | 20,38 | 79,57 | 75,88 |
| 7 | NaOH | 0,861 | Sodium sulfate solution | 0,025 | 10,74 | 2,42 | 1,67 | 13,88 | 13,45 | 82,6 | 83,07 |
| 8 | NaOH | 0,875 | Sodium sulfate solution | 0,05 | 9,85 | 1,88 | 1,34 | 19,53 | 15,87 | 77,06 | 79,77 |
| 9 | NaOH | 0,846 | Sodium sulfate solution | 0,075 | 9,58 | 1,92 | 1,35 | 21,04 | 18,72 | 75,43 | 77,57 |
| 10 | NaOH | 0,863 | Sodium sulfate solution | 0,1 | 9,27 | 2,13 | 1,47 | 19,09 | 15,59 | 77,95 | 80,05 |
| 11 | NaOH | 0,866 | Sodium carbonate solution | 0,025 | 10,9 | 2,28 | 1,33 | 19,05 | 15,26 | 78,95 | 81,79 |
| 12 | NaOH | 0,897 | Sodium carbonate solution | 0,05 | 8,72 | 2,13 | 1,21 | 14,28 | 13,89 | 81,95 | 82,27 |
| 13 | NaOH | 0,89 | Sodium carbonate solution | 0,075 | 8,82 | 2,22 | 1,78 | 13,03 | 18,46 | 82,93 | 78,11 |
| 14 | NaOH | 0,859 | Sodium carbonate solution | 0,1 | 8,85 | 2,25 | 1,42 | 13,26 | 11,9 | 82,72 | 84,63 |
| 15 | KOH | 0,892 | Sodium chloride solution | 0,025 | 10,36 | 2,31 | 1,4 | 21,98 | 17,81 | 74,22 | 77,93 |
| 16 | KOH | 0,855 | Sodium chloride solution | 0,05 | 9,69 | 1,93 | 1,54 | 12,9 | 12,37 | 83,95 | 85,00 |
| 17 | KOH | 0,899 | Sodium chloride solution | 0,075 | 9,56 | 1,88 | 1,53 | 14 | 14,41 | 83,88 | 82,39 |
| 18 | KOH | 0,891 | Sodium chloride solution | 0,1 | 10,84 | 1,87 | 1,76 | 16,93 | 19,64 | 80,64 | 77,74 |
| 19 | KOH | 0,896 | Sodium sulfate solution | 0,025 | 10,27 | 2,1 | 1,56 | 20,92 | 20,45 | 76,22 | 75,31 |

(continued)

| Basic parameters and supramolecular characteristics of PMSPH samples obtained in accordance with the Examples | | | | | | | | | | | |
|---|---|---|---|---|---|---|---|---|---|---|---|
| Example | Parameters of substances | | | | | | | PMSPH supramolecular characteristics | | | |
| | Solution of methylsilanetriol in alkali | | Electrolyte | | PMSPH | | | | | | |
| | Alkali type | MeOH/PMS ratio, mol/mol | Type | Quantity, mole per 1 mole of alkali | Dry residue, % | Sorption capacity, mg/g | | Not washed out from PMSPH, % | | Washed out, % | |
| | | | | | | for MO | for BSA | MO | BSA | MO | BSA |
| **1** | **2** | **3** | **4** | **5** | **6** | **7** | **8** | **9** | **10** | **11** | **12** |
| 20 | KOH | 0,862 | Sodium sulfate solution | 0,05 | 10,45 | 2,25 | 1,35 | 13,06 | 21,55 | 83,11 | 75,89 |
| 21 | KOH | 0,885 | Sodium sulfate solution | 0,075 | 9,04 | 2 | 1,7 | 16,77 | 21,24 | 80,34 | 76,36 |
| 22 | KOH | 0,889 | Sodium sulfate solution | 0,1 | 9,43 | 2,24 | 1,55 | 18,2 | 14,88 | 79,42 | 80,68 |
| 23 | KOH | 0,877 | Sodium carbonate solution | 0,025 | 10,43 | 2,49 | 1,79 | 21,67 | 14,96 | 74,89 | 81,63 |
| 24 | KOH | 0,871 | Sodium carbonate solution | 0,05 | 9,88 | 2,31 | 1,31 | 16,09 | 14,12 | 79,76 | 83,11 |
| 25 | KOH | 0,874 | Sodium carbonate solution | 0,075 | 8,83 | 2,32 | 1,39 | 15,72 | 18,31 | 81,11 | 78,65 |
| 26 | KOH | 0,851 | Sodium carbonate solution | 0,1 | 9,13 | 2 | 1,69 | 20,88 | 18,2 | 76,19 | 78,79 |
| 27 | NaOH | 0,86 | Potassium chloride solution | 0,025 | 9,42 | 2,01 | 1,8 | 19,96 | 12,47 | 76,43 | 85,17 |
| 28 | NaOH | 0,84 | Potassium chloride solution | 0,05 | 9,1 | 2,43 | 1,45 | 21,89 | 12,51 | 75,73 | 83,79 |
| 29 | NaOH | 0,867 | Potassium chloride solution | 0,075 | 9,84 | 2,11 | 1,78 | 16,28 | 16,9 | 79,42 | 79,93 |
| 30 | NaOH | 0,851 | Potassium chloride solution | 0,1 | 9,16 | 2,15 | 1,47 | 14,74 | 16,24 | 82,26 | 80,63 |
| 31 | NaOH | 0,857 | Potassium sulfate solution | 0,025 | 8,68 | 2,46 | 1,3 | 21,01 | 16,66 | 75,25 | 79,16 |
| 32 | NaOH | 0,882 | Potassium sulfate solution | 0,05 | 10,61 | 2,46 | 1,41 | 20,44 | 22,37 | 77,47 | 74,98 |
| 33 | NaOH | 0,866 | Potassium sulfate solution | 0,075 | 9,73 | 1,93 | 1,3 | 17,93 | 14,74 | 79,57 | 81,47 |
| 34 | NaOH | 0,862 | Potassium sulfate solution | 0,1 | 10,75 | 1,83 | 1,67 | 13,01 | 13,15 | 82,97 | 83,55 |
| 35 | NaOH | 0,859 | Potassium carbonate solution | 0,025 | 8,73 | 2,34 | 1,79 | 18,87 | 18,36 | 77,21 | 78,37 |
| 36 | NaOH | 0,839 | Potassium carbonate solution | 0,05 | 8,92 | 2,22 | 1,58 | 21,33 | 18,43 | 75,93 | 77,49 |
| 37 | NaOH | 0,889 | Potassium carbonate solution | 0,075 | 9,68 | 2,03 | 1,6 | 15,84 | 16,81 | 81,86 | 78,70 |
| 38 | NaOH | 0,873 | Potassium carbonate solution | 0,1 | 10,61 | 2 | 1,63 | 16,11 | 15,84 | 81,12 | 81,37 |

(continued)

| Basic parameters and supramolecular characteristics of PMSPH samples obtained in accordance with the Examples | | | | | | | | | | | |
|---|---|---|---|---|---|---|---|---|---|---|---|
| Example | Parameters of substances | | | | | | | PMSPH supramolecular characteristics | | | |
| | Solution of methylsilanetriol in alkali | | Electrolyte | | PMSPH | | | | | | |
| | Alkali type | MeOH/PMS ratio, mol/mol | Type | Quantity, mole per 1 mole of alkali | Dry residue, % | Sorption capacity, mg/g | | Not washed out from PMSPH, % | | Washed out, % | |
| | | | | | | for MO | for BSA | MO | BSA | MO | BSA |
| **1** | **2** | **3** | **4** | **5** | **6** | **7** | **8** | **9** | **10** | **11** | **12** |
| 39 | KOH | 0,841 | Potassium chloride solution | 0,025 | 8,93 | 1,98 | 1,66 | 19,99 | 21,69 | 77 | 74,29 |
| 40 | KOH | 0,866 | Potassium chloride solution | 0,05 | 9,37 | 2,06 | 1,49 | 13,99 | 17,57 | 82,79 | 78,96 |
| 41 | KOH | 0,882 | Potassium chloride solution | 0,075 | 9,2 | 2,19 | 1,42 | 18,08 | 19,83 | 79,02 | 76,50 |
| 42 | KOH | 0,872 | Potassium chloride solution | 0,1 | 10,1 | 2,41 | 1,6 | 15,24 | 13,23 | 82,66 | 84,02 |
| 43 | KOH | 0,855 | Potassium sulfate solution | 0,025 | 8,8 | 1,99 | 1,64 | 11,89 | 17,07 | 85,74 | 78,99 |
| 44 | KOH | 0,872 | Potassium sulfate solution | 0,05 | 9,8 | 2,03 | 1,8 | 16,76 | 15,74 | 80,33 | 81,28 |
| 45 | KOH | 0,874 | Potassium sulfate solution | 0,075 | 10,95 | 2,45 | 1,22 | 19,9 | 17,19 | 75,76 | 79,22 |
| 46 | KOH | 0,85 | Potassium sulfate solution | 0,1 | 9,03 | 2,37 | 1,35 | 11,96 | 22,2 | 85,4 | 75,53 |
| 47 | KOH | 0,842 | Potassium carbonate solution | 0,025 | 9,09 | 1,89 | 1,49 | 21,65 | 18,66 | 74,44 | 78,05 |
| 48 | KOH | 0,894 | Potassium carbonate solution | 0,05 | 10,71 | 2,19 | 1,42 | 22,29 | 17,87 | 75,33 | 78,94 |
| 49 | KOH | 0,871 | Potassium carbonate solution | 0,075 | 9,7 | 2,48 | 1,63 | 20,44 | 19,63 | 75,58 | 75,92 |
| 50 | KOH | 0,878 | Potassium carbonate solution | 0,1 | 9,56 | 2,29 | 1,63 | 12,05 | 14,43 | 83,99 | 82,83 |
| 51 | NaOH | 0,890 | Lithium chloride solution | 0,035 | 10,19 | 1,93 | 1,55 | 14,75 | 11,59 | 81,6 | 84,80 |
| 52 | NaOH | 0,883 | Ammonium chloride solution | 0,03 | 10,89 | 1,83 | 1,78 | 19,29 | 15,42 | 77,99 | 80,91 |
| 53 | KOH | 0,871 | Lithium bromide solution | 0,085 | 10,35 | 2,42 | 1,6 | 13,76 | 16,04 | 82,58 | 80,59 |
| 54 | KOH | 0,884 | Sodium bromide solution | 0,03 | 8,78 | 2,16 | 1,66 | 13,08 | 19,28 | 83,87 | 77,40 |
| 55 | KOH | 0,880 | Potassium bromide solution | 0,025 | 9,95 | 1,98 | 1,6 | 17,16 | 17,73 | 80,9 | 79,14 |
| 56 | NaOH | 0,847 | Ammonium bromide solution | 0,07 | 10,15 | 2,2 | 1,69 | 18,54 | 18,89 | 78,98 | 77,40 |
| 57 | NaOH | 0,898 | Lithium iodide solution | 0,09 | 10,7 | 2,2 | 1,39 | 21,06 | 14,27 | 76,18 | 81,59 |

(continued)

| Basic parameters and supramolecular characteristics of PMSPH samples obtained in accordance with the Examples | | | | | | | | | | | |
|---|---|---|---|---|---|---|---|---|---|---|---|
| Example | Parameters of substances | | | | | | | PMSPH supramolecular characteristics | | | |
| | Solution of methylsilanetriol in alkali | | Electrolyte | | PMSPH | | | | | | |
| | Alkali type | MeOH/PMS ratio, mol/mol | Type | Quantity, mole per 1 mole of alkali | Dry residue, % | Sorption capacity, mg/g | | Not washed out from PMSPH, % | | Washed out, % | |
| | | | | | | for MO | for BSA | MO | BSA | MO | BSA |
| **1** | **2** | **3** | **4** | **5** | **6** | **7** | **8** | **9** | **10** | **11** | **12** |
| 58 | KOH | 0,870 | Sodium iodide solution | 0,095 | 10,48 | 2,21 | 1,67 | 13,23 | 20,92 | 83,57 | 76,33 |
| 59 | NaOH | 0,848 | Potassium iodide solution | 0,08 | 9,9 | 2,07 | 1,42 | 15,9 | 13,83 | 80,92 | 82,52 |
| 60 | NaOH | 0,889 | Ammonium iodide solution | 0,1 | 9,31 | 1,83 | 1,35 | 11,81 | 13,14 | 84,6 | 84,69 |
| 61 | NaOH | 0,893 | Lithium nitrite solution | 0,1 | 10,59 | 2,22 | 1,4 | 16,76 | 15,88 | 80,01 | 80,00 |
| 62 | KOH | 0,845 | Sodium nitrite solution | 0,035 | 8,84 | 2,33 | 1,69 | 12,77 | 17,4 | 83,97 | 79,09 |
| 63 | NaOH | 0,877 | Potassium nitrite solution | 0,045 | 9,55 | 2,38 | 1,38 | 19,38 | 20,18 | 76,74 | 75,31 |
| 64 | KOH | 0,895 | Ammonium nitrite solution | 0,07 | 10,94 | 1,82 | 1,2 | 15,93 | 21,33 | 80,93 | 76,18 |
| 65 | NaOH | 0,896 | Lithium nitrate solution | 0,06 | 9,26 | 1,89 | 1,29 | 16,46 | 16,49 | 80,37 | 80,07 |
| 66 | NaOH | 0,854 | Sodium nitrate solution | 0,095 | 10,45 | 2,24 | 1,58 | 22,28 | 13,12 | 75,51 | 84,53 |
| 67 | NaOH | 0,850 | Potassium nitrate solution | 0,085 | 9,99 | 2,26 | 1,75 | 21,27 | 12,44 | 75,05 | 83,65 |
| 68 | KOH | 0,860 | Ammonium nitrate solution | 0,06 | 9,05 | 1,92 | 1,29 | 14,93 | 15,9 | 81,64 | 81,71 |
| 69 | KOH | 0,862 | Lithium carbonate solution | 0,1 | 10,78 | 2,19 | 1,28 | 19,93 | 18,63 | 77,44 | 77,71 |
| 70 | NaOH | 0,851 | Ammonium carbonate solution | 0,08 | 9,7 | 2,28 | 1,2 | 13,61 | 13,42 | 83,98 | 84,32 |
| 71 | KOH | 0,843 | Lithium sulfate solution | 0,095 | 10,24 | 2,2 | 1,33 | 13,11 | 14,68 | 84,44 | 82,07 |
| 72 | NaOH | 0,880 | Ammonium sulfate solution | 0,075 | 9,83 | 2,22 | 1,42 | 21,13 | 13,05 | 76,07 | 83,42 |
| 73 | KOH | 0,851 | Lithium sulfite solution | 0,03 | 9,9 | 2,22 | 1,77 | 15,41 | 11,85 | 81,27 | 85,52 |
| 74 | KOH | 0,884 | Sodium sulfite solution | 0,04 | 10,36 | 2,12 | 1,39 | 17,44 | 14,21 | 78,22 | 82,03 |
| 75 | NaOH | 0,891 | Potassium sulfite solution | 0,025 | 10,09 | 2,19 | 1,31 | 13,48 | 16,26 | 82,84 | 79,72 |
| 76 | NaOH | 0,868 | Ammonium sulfite solution | 0,06 | 9,94 | 2,14 | 1,35 | 13,86 | 16,11 | 83,9 | 80,94 |

(continued)

| Basic parameters and supramolecular characteristics of PMSPH samples obtained in accordance with the Examples | | | | | | | | | | | |
|---|---|---|---|---|---|---|---|---|---|---|---|
| Example | Parameters of substances | | | | | | | PMSPH supramolecular characteristics | | | |
| | Solution of methylsilanetriol in alkali | | Electrolyte | | PMSPH | | | | | | |
| | Alkali type | MeOH/PMS ratio, mol/mol | Type | Quantity, mole per 1 mole of alkali | Dry residue, % | Sorption capacity, mg/g | | Not washed out from PMSPH, % | | Washed out, % | |
| | | | | | | for MO | for BSA | MO | BSA | MO | BSA |
| **1** | **2** | **3** | **4** | **5** | **6** | **7** | **8** | **9** | **10** | **11** | **12** |
| 77 | KOH | 0,877 | Lithium acetate solution | 0,065 | 9,54 | 2,29 | 1,47 | 11,88 | 21,91 | 84,62 | 74,89 |
| 78 | NaOH | 0,851 | Sodium acetate solution | 0,03 | 0,1 | 2,48 | 1,54 | 18,86 | 21,4 | 77,59 | 75,56 |
| 79 | NaOH | 0,860 | Potassium acetate solution | 0,055 | 9,43 | 1,93 | 1,45 | 18,86 | 18,53 | 77,16 | 78,32 |
| 80 | KOH | 0,865 | Ammonium acetate solution | 0,095 | 9,77 | 2,4 | 1,23 | 14,5 | 21,59 | 81,53 | 75,13 |
| 81 | NaOH | 0,845 | Lithium citrate solution | 0,09 | 8,91 | 2,45 | 1,39 | 13,77 | 14,65 | 82,94 | 81,03 |
| 82 | NaOH | 0,884 | Sodium citrate solution | 0,035 | 9,03 | 2,29 | 1,39 | 13,91 | 20,25 | 82,76 | 77,33 |
| 83 | KOH | 0,841 | Potassium citrate solution | 0,08 | 9,12 | 2,48 | 1,74 | 20,55 | 13,68 | 76,43 | 84,18 |
| 84 | KOH | 0,884 | Ammonium citrate solution | 0,03 | 9,32 | 2,13 | 1,51 | 13,89 | 16,05 | 82,42 | 80,27 |
| 85 | NaOH | 0,896 | Lithium succinate solution | 0,09 | 10,12 | 1,95 | 1,61 | 19,32 | 14,85 | 76,58 | 81,96 |
| 86 | NaOH | 0,893 | Sodium succinate solution | 0,055 | 10,89 | 1,87 | 1,72 | 18,79 | 20,11 | 78,15 | 76,96 |
| 87 | KOH | 0,857 | Potassium succinate solution | 0,1 | 10,43 | 1,85 | 1,67 | 22,05 | 16,58 | 75,04 | 80,64 |
| 88 | NaOH | 0,843 | Ammonium succinate solution | 0,03 | 9,17 | 1,91 | 1,55 | 12,71 | 21,1 | 83,36 | 74,84 |
| 89 | KOH | 0,859 | Lithium oxalate solution | 0,045 | 8,73 | 1,96 | 1,66 | 17,07 | 13,5 | 80,47 | 83,36 |
| 90 | NaOH | 0,845 | Sodium oxalate solution | 0,095 | 10,5 | 1,82 | 1,56 | 14,36 | 21,35 | 82,38 | 76,44 |
| 91 | NaOH | 0,852 | Potassium oxalate solution | 0,025 | 10,96 | 2,22 | 1,49 | 13,21 | 14,92 | 83,18 | 82,04 |
| 92 | NaOH | 0,896 | Ammonium oxalate solution | 0,045 | 10,68 | 2,23 | 1,3 | 14,23 | 13,65 | 82,66 | 83,16 |
| 93 | KOH | 0,888 | Lithium formate solution | 0,07 | 8,89 | 2,43 | 1,53 | 14,92 | 21,28 | 81,88 | 74,78 |
| 94 | KOH | 0,879 | Sodium formate solution | 0,085 | 10,55 | 2,32 | 1,42 | 12,73 | 19,82 | 83,09 | 77,00 |
| 95 | KOH | 0,875 | Potassium formate solution | 0,09 | 9,71 | 2,26 | 1,6 | 22,04 | 12,33 | 75,15 | 83,78 |

(continued)

Basic parameters and supramolecular characteristics of PMSPH samples obtained in accordance with the Examples

| Example | Parameters of substances | | | | | | | PMSPH supramolecular characteristics | | | |
|---|---|---|---|---|---|---|---|---|---|---|---|
| | Solution of methylsilanetriol in alkali | | Electrolyte | | PMSPH | | | | | | |
| | Alkali type | MeOH/PMS ratio, mol/mol | Type | Quantity, mole per 1 mole of alkali | Dry residue, % | Sorption capacity, mg/g | | Not washed out from PMSPH, % | | Washed out, % | |
| | | | | | | for MO | for BSA | MO | BSA | MO | BSA |
| **1** | **2** | **3** | **4** | **5** | **6** | **7** | **8** | **9** | **10** | **11** | **12** |
| 96 | KOH | 0,883 | Ammonium formate solution | 0,07 | 9,93 | 2,22 | 1,73 | 18,16 | 13,94 | 78,39 | 82,23 |

## General conclusions

It has been experimentally proven that the solution of methylsilanetriol in alkali produced by the authors of the invention is not described in the literature and does not belong to substances such as potassium methylsiliconate or sodium methylsiliconate.

With a MeOH/PMS molar ratio in the range of 0.84-0.9, the process of dissolving methylsilanetriol in alkali results in an exclusively dimeric set of molecules.

A set of dimers of standard composition can be obtained from dehydrated methylsilanetriol.

It has been established that during the process of polycondensation, the formation of low molecular weight fractions, which "clog" the final product, occur. It was also found that for this reason the possibility of substitution reactions occurring is difficult.

Adding an electrolyte to a solution of methylsilanetriol in alkali promotes production of PMSPH having the supramolecular properties of a molecular capsule.

In the process of producing PMSPH according to the described scheme, one of its characteristic properties is sorption capacity, which positions the substance also as a sorbent containing polymethylsiloxane polyhydrate.

The structural formula of PMSPH is presented as a dimer of variable composition, as an elementary unit, with a polyhydrate shell and a mass-average molecular mass tending to infinity.

## Claims

1. A method for producing a polymethylsiloxane polyhydrate having supramolecular properties of a molecular capsule, wherein a metasil solution is undergone a polycondensation with acid, the said solution being obtained by mixing at temperatures above 90°C in a ratio of 0.84-0.9 mol of alkali per 1 mol of polymethylsiloxane contained in methylsilanetriol, and adding an electrolyte in an amount of 0.025-0.1 mol for each mole of alkali.

2. The method according to claim 1, wherein the electrolyte is lithium, or sodium, or potassium, or ammonium chloride, or bromide, or iodide, or nitrate, or nitrite, or carbonate, or sulfate, or sulfite, or acetate, or oxalate, or succinate, or formate, or citrate or mixtures of the salts thereof.

3. The method according to claim 1, wherein the alkali is sodium or potassium hydroxide.

4. A polymethylsiloxane polyhydrate having supramolecular properties produced by the method according to claim 1 with the chemical formula:

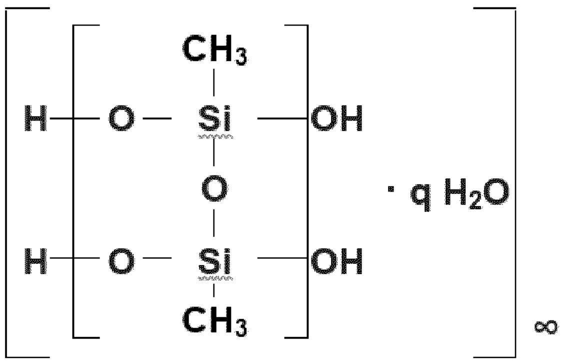

in which

the q range from 60 to 92 is typical for a product in the form of a gel,
the q range from 89 to 134 is typical for a product in the form of a paste,
the q range from 133 to 241 is typical for a product in the form of a suspension.

5. A sorbent containing polymethylsiloxane polyhydrate according to claim 4.

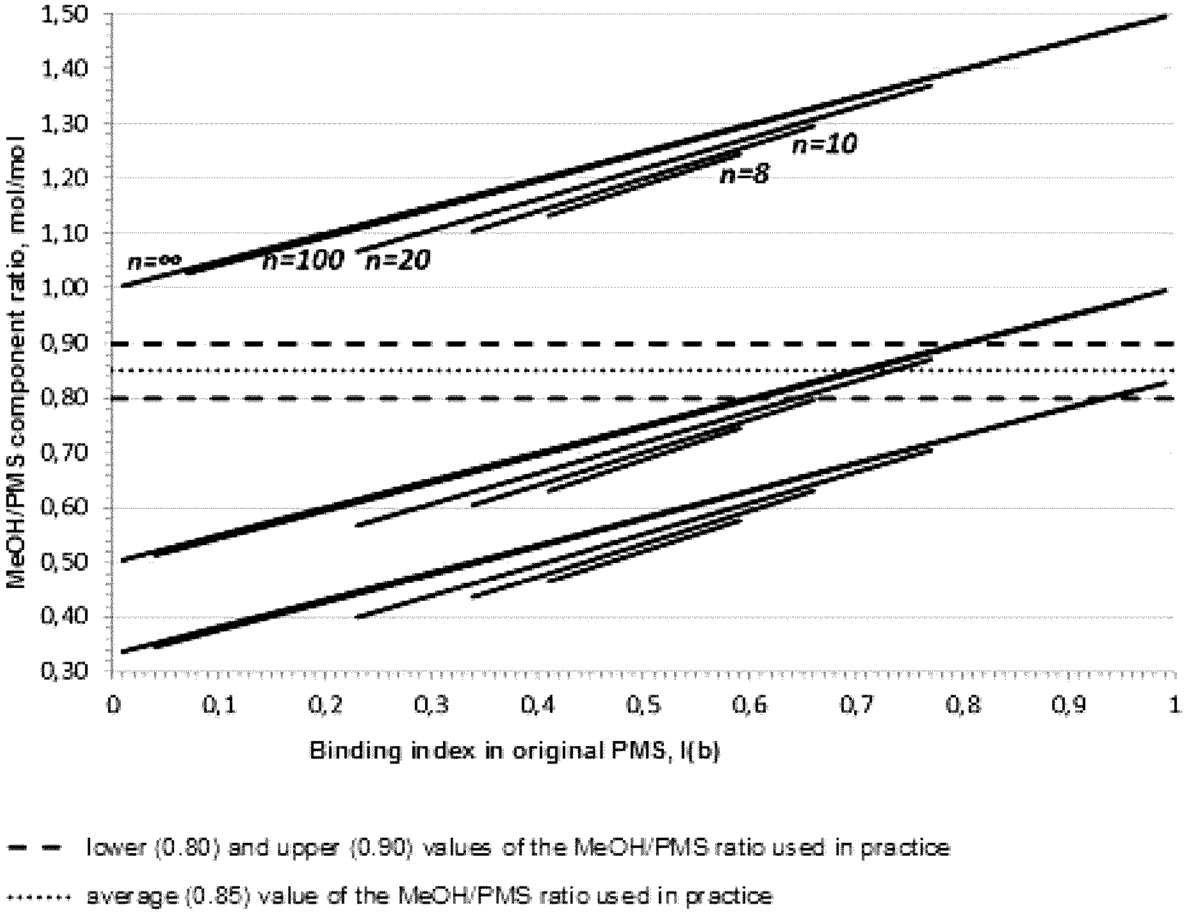
1,50
1,40
1,30
1,20
1,10
1,00
0,90
0,80
0,70
0,60
0,50
0,40
0,30
MeOH/PMS component ratio, mol/mol
n=∞
n=100
n=20
n=8
n=10
0
0,1
0,2
0,3
0,4
0,5
0,6
0,7
0,8
0,9
1
Binding index in original PMS, I(b)
lower (0.80) and upper (0.90) values of the MeOH/PMS ratio used in practice
average (0.85) value of the MeOH/PMS ratio used in practice

FIG. 1

European Patent Office

# EUROPEAN SEARCH REPORT

Application Number
EP 24 21 0128

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | EP 2 075 276 A1 (ZAKRYTE AKTSIONERNE TOVARYSTVO [UA]) 1 July 2009 (2009-07-01)<br>* paragraph [0010] - paragraph [0018] *<br>* examples 1-33 * | 4,5<br>1-3 | INV.<br>C08G77/16 |
| X<br>A | RU 2 761 627 C1 (OBSHCHESTVO S OGRANICHENNOI OTVETSTVENNOSTIU GROTEX OOO GROTEX [RU]) 13 December 2021 (2021-12-13)<br>* page 6, line 7 - page 8, line 37 *<br>* examples 1-4 * | 4,5<br>1-3 | |
| A | EP 2 514 717 A1 (SORBOCOM LTD [CY]) 24 October 2012 (2012-10-24)<br>* paragraph [0001] *<br>* paragraph [0007] - paragraph [0018] *<br>* examples 1-12 * | 1-5 | |
| A | WO 2020/204748 A1 (LLC TULSKAYA FARMATSEVTICHESKAYA FABRIKA [RU]) 8 October 2020 (2020-10-08)<br>* page 1, paragraph 4 - page 3, paragraph 2 *<br>* examples 1-7 * | 1-5 | TECHNICAL FIELDS SEARCHED (IPC)<br>C08G |

The present search report has been drawn up for all claims

1

| Place of search | Date of completion of the search | Examiner |
|---|---|---|
| The Hague | 25 March 2025 | Stinchcombe, John |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO.

EP 24 21 0128

This annex lists the patent family members relating to the patent documents cited in the above-mentioned European search report.
The members are as contained in the European Patent Office EDP file on
The European Patent Office is in no way liable for these particulars which are merely given for the purpose of information.

25-03-2025

| Patent document cited in search report | Publication date | Patent family member(s) | Publication date |
|---|---|---|---|
| EP 2075276 A1 | 01-07-2009 | EA 200800832 A1 | 30-06-2009 |
| | | EP 2075276 A1 | 01-07-2009 |
| | | UA 82774 C2 | 12-05-2008 |
| | | US 2010240532 A1 | 23-09-2010 |
| | | WO 2008036056 A1 | 27-03-2008 |
| RU 2761627 C1 | 13-12-2021 | NONE | |
| EP 2514717 A1 | 24-10-2012 | EA 201200340 A1 | 28-09-2012 |
| | | EP 2514717 A1 | 24-10-2012 |
| | | PL 2514717 T3 | 30-01-2015 |
| | | UA 90988 C2 | 10-06-2010 |
| | | WO 2011075095 A1 | 23-06-2011 |
| WO 2020204748 A1 | 08-10-2020 | RU 2714728 C1 | 20-02-2020 |
| | | WO 2020204748 A1 | 08-10-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- RU 2761627 C1
- RU 01122020 C1
- RU 2111979 C1
- SU 137113
- UA 115857 C2
- RU 2293744 C1


### Non-patent literature cited in the description


- *CHEMICAL ABSTRACTS*, 2445-53-6
- *CHEMICAL ABSTRACTS*, 75-79-6
- **R.G. JONES** ; **W. ANDO** ; **J. CHOJNOWSKI**. Silicon-Containing Polymers: The Science and Technology of Their Synthesis and Applications. Springer Science & Business Media, 2013, 768
- **S. SAKKA**. Handbook of Sol-Gel Science and Technology. Kluwer Academic Publishers, 2005, 1986
- **M.G. VORONKOV** ; **V.P. MILESHKEVICH** ; **YU.A. YUZHELEVSKY**. *Siloxane Linkage*, 1976, 413
- *CHEMICAL ABSTRACTS*, 4493-34-9
- *CHEMICAL ABSTRACTS*, 18089-65-1
- *CHEMICAL ABSTRACTS*, 65351-55-5
- **M.G.VORONKOV** ; **YU.N. MURINOV et al.** Influence of conditions of hydrolytic polycondensation of methyltrichlorosilane on the sorption properties of the resulting silicon polymers. *High-molecular compounds, Series A*, 2000, vol. 42 (7), 1175-1182
- **V.M. KOPYLOV** ; **L.M. KHANANASHVILI** ; **O.V. SHKOLNIK**. A.G. Ivanov Hydrolytic polycondensation of organochlorosilanes (review). *High-molecular compounds, Series A*, 1995, vol. 37 (3), 394-416
- **M.G. VORONKOV** ; **YU.N. MURINOV et al.** Influence of conditions of hydrolytic polycondensation of methyltrichlorosilane on the sorption properties of the resulting silicon polymers. *High-molecular compounds, Series A*, 2000, vol. 42 (7), 1175-1182
- **S.V. VDOVINA** ; **E.YU. BONDYREVA**. Polycondensation: Guidelines for self-study, Nizhnekamsk. *Nizhnekamsk Institute of Chemical Technology, branch of the Federal State Budgetary Educational Institution of Higher Professional Education "KNITU*, 2014, 28
- **DONALD J. CRAM** ; **JANE M.** Cram Container Molecules and Their Guests. University of California, 1994
- **E.V. VOROBYEVA** ; **N. P. KRUTKO**. Polymer complexes in aqueous and saline environments, National Academy of Sciences of Belarus. *Institute of General and Inorganic Chemistry*, 2010, 175